(19) Europäisches Patentamt / European Patent Office / Office européen des brevets

(11) **EP 3 796 110 A1**

(12) **EUROPEAN PATENT APPLICATION**
published in accordance with Art. 153(4) EPC

(43) Date of publication:
**24.03.2021 Bulletin 2021/12**

(51) Int Cl.:
**G05B 15/02** (2006.01)    **G05B 19/418** (2006.01)

(21) Application number: **19804019.8**

(22) Date of filing: **12.04.2019**

(86) International application number:
**PCT/CN2019/082348**

(87) International publication number:
**WO 2019/218820 (21.11.2019 Gazette 2019/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2018 CN 201810455771**

(71) Applicant: ZTE Corporation
Shenzhen, Guangdong 518057 (CN)

(72) Inventors:
• **WEN, Haijiao**
  Shenzhen, Guangdong 518057 (CN)
• **CHEN, Hong**
  Shenzhen, Guangdong 518057 (CN)
• **NIU, Guoyang**
  Shenzhen, Guangdong 518057 (CN)
• **DONG, Xiugang**
  Shenzhen, Guangdong 518057 (CN)

(74) Representative: **Brunazzi, Stefano et al**
Jacobacci & Partners S.p.A.
Via Senato, 8
20121 Milano (IT)

(54) **METHOD AND APPARATUS FOR DETERMINING CONTROLLED OBJECT, AND STORAGE MEDIUM AND ELECTRONIC DEVICE**

(57)    The present disclosure provides a method and apparatus for determining a control object, a storage medium, and an electronic device. The method includes: obtaining a first control instruction and state information of one or more to-be-controlled objects at a first device, wherein there is a communication connection established between the first device and each of the one or more to-be-controlled objects; and determining, from the one or more to-be-controlled objects according to the state information, a target object that the first control instruction requests to control. Through the solution provided in the embodiments of the present disclosure, the technical problem in the related art that cumbersome operations are required for determining the target object is solved.

Obtaining a first control instruction and state information of one or more to-be-controlled objects at a first device, wherein there is a communication connection established between the first device and each of the one or more to-be-controlled objects — S202

Determine, from the one or more to-be-controlled objects according to the state information, a target object that the first control instruction requests to control — S204

**Fig. 2**

EP 3 796 110 A1

## Description

### Technical Field

The present disclosure relates to the field of communications, and more particularly to a method and apparatus for determining a control object, a storage medium, and an electronic device.

### Background

In the related art, various smart interactive devices have greatly increased, such as Jingdong's Dingdong speakers, Amazon's echo, and smart set-top boxes. Semantic understanding is one of the key and difficult techniques of current smart interactive devices, and is mainly manifested in multi-dimensional scene expansion and context understanding levels.

For the multi-dimensional scene expansion, the related art continuously expand scene parsers mainly based on service customization methods. In this related art, a dialog management mechanism is determined by a scene. When a new scene is accessed, a set of management mechanism needs to be re-customized. The implementation process is complicated and cannot be expanded quickly. In addition, scene identification only understands the domain of the current message at a shallow level, and cannot understand the real intent of users at a deep level.

In a related art, the existing solutions are only applicable to pure voice/text smart interactive devices, and an artificial intelligence technology has not yet reached a state of practical application freely.

If the current solution is processed by the dialog management module of a semantic understanding system, errors or incomprehensibility when switching between scenes may be caused. For example, when a user first presses a switch to turn on a light in a bedroom and then says "it's too dark", the user actually wants to turn up the light, but a smart central control cannot correctly understand this instruction.

In view of the above problem in the related art, an effective solution has not been found yet.

### Summary

The embodiments of the present disclosure provide a method and apparatus for determining a control object, a storage medium, and an electronic device.

According to an embodiment of the present disclosure, a method for determining a control object is provided, which may include: a first control instruction and state information of one or more to-be-controlled objects are obtained at a first device, wherein there is a communication connection established between the first device and each of the one or more to-be-controlled objects; and a target object that the first control instruction requests to control is determined from the one or more to-be-controlled objects according to the state information.

According to another embodiment of the present disclosure, an apparatus for determining a control object is provided, which may include: an obtaining module, configured to obtain a first control instruction and state information of one or more to-be-controlled objects at a first device, wherein there is a communication connection established between the first device and each of the one or more to-be-controlled objects; and a determining module, configured to determine, from the one or more to-be-controlled objects according to the state information, a target object that the first control instruction requests to control.

According to another embodiment of the present disclosure, a storage medium is provided. The storage medium may store a computer program which, when being run, performs the operations in any one of the above method embodiments.

According to yet another embodiment of the present disclosure, an electronic device is provided. The electronic device may include a memory and a processor. The memory may store a computer program. The processor may be configured to run the computer program to perform the operations in any one of the above method embodiments.

Through the solution in the embodiments of the present disclosure, state information of one or more to-be-controlled objects is obtained, and a target object that a first control instruction requests to control is determined according to the state information of the one or more to-be-controlled objects. The technical problem in the related art that cumbersome operations are required for determining the target object is solved, the number of interactions between a central control and a user is reduced, the intelligence of the central control is improved, and the user experience is improved.

### Brief Description of the Drawings

The accompanying drawings described herein are used to provide a deeper understanding of the present disclosure, and constitute a part of the present application, and the exemplary embodiments of the present disclosure and the description thereof are used to explain the present disclosure, but do not constitute improper limitations to the present disclosure. In the drawings:

Fig. 1 is a diagram showing the network architecture according to an embodiment of the present disclosure;

Fig. 2 is a flowchart of a method for determining a control object according to an embodiment of the present disclosure;

Fig. 3 is a structural block diagram of an apparatus for determining a control object according to an embodiment of the present disclosure;

Fig. 4 is a diagram showing the overall system architecture according to an embodiment of the present disclosure;

Fig. 5 is a flowchart showing the processing flow of a deep semantic understanding module according to an embodiment of the present disclosure;

Fig. 6 is a schematic diagram showing the process of storing user historical data of a memory module according to an embodiment of the present disclosure;

Fig. 7 is a diagram showing the framework of a domain identification model according to an embodiment of the present disclosure;

Fig. 8 is a diagram showing the framework of an intent identification model according to an embodiment of the present disclosure;

Fig. 9 is a diagram showing the framework of a home service robot in Implementation 1;

Fig. 10 is a flowchart showing the processing flow of a home service robot in Implementation 1;

Fig. 11 is a diagram showing the framework of a smart set-top box in Implementation 2;

Fig. 12 is a flowchart showing the processing flow of a smart set-top box in Implementation 2;

Fig. 13 is a diagram showing the framework of a smart conference control in Implementation 3;

Fig. 14 is a flowchart for a smart conference control in Implementation 3;

Fig. 15 is a diagram showing the framework of a smart vehicle in Implementation 4; and

Fig. 16 is a flowchart for a smart vehicle in Implementation 4.

## Detailed Description of the Embodiments

The present disclosure is described below with reference to the drawings and in conjunction with the embodiments in detail. It is to be noted that embodiments in the present application and characteristics in the embodiments may be combined under the condition of no conflicts.

It is to be noted that the specification and claims of the present disclosure and the terms "first", "second" and the like in the drawings are used to distinguish similar objects, and are not used to describe a specific sequence or a precedence order.

Embodiment 1

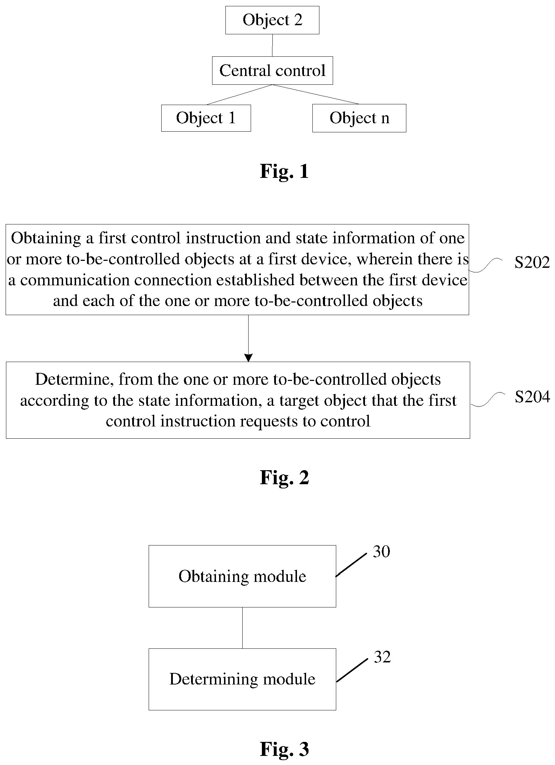

The embodiment of the present application may be implemented on a network architecture shown in Fig. 1. Fig. 1 is a diagram showing the network architecture according to an embodiment of the present disclosure. As shown in Fig. 1, the network architecture includes: a central control and objects controlled by the central control. The central control controls each object according to control instructions.

A method for determining a control object implemented on the above network architecture is provided in the present embodiment. Fig. 2 is a flowchart of a method for determining a control object according to an embodiment of the present disclosure. As shown in Fig. 2, the flow includes the following operations.

In operation S202, a first control instruction and state information of one or more to-be-controlled objects are obtained at a first device, wherein there is a communication connection established between the first device and each of the one or more to-be-controlled objects.

In operation S204, a target object that the first control instruction requests to control is determined from the one or more to-be-controlled objects according to the state information.

Through the above operations, state information of one or more to-be-controlled objects is obtained, and a target object that a first control instruction requests to control is determined according to the state information of the one or more to-be-controlled objects. The technical problem in the related art that cumbersome operations are required for determining the target object is solved, the number of interactions between a central control and a user is reduced, the intelligence of the central control is improved, and the user experience is improved.

Optionally, the execution subject of the above operations (that is, the first device) may be a central control (control unit), for example but not limited to, a speaker, a mobile phone, a set-top box, a robot, a vehicle-mounted device, and a smart housekeeper. Of course, it is not necessary to obtain, at a first device, the first control instruction and the state information of the one or more to-be-controlled objects. In fact, the first control instruction and the state information of the one or more to-be-controlled objects may be directly obtained instead. In this situation, the execution subject is no longer the first device, but a communication device connected to the first device, such as a control device of the first device.

In an implementation of the present embodiment, the operation that a target object that the first control instruction requests to control is determined from the one or more to-be-controlled objects according to the state information may include:

the state information of the one or more to-be-controlled objects is parsed, and the target object is determined from the one or more to-be-controlled objects according to a predetermined correspondence relationship. The predetermined correspondence relationship is used for indicating a correspondence relationship between state information and target objects. For example, when the state information of a first object indicates a switch-on state or a standby state, the first object is a target object. As another example, when the state information of a second object indicates a switch-off state, the second object is not the target object. As still another example, when the state information of a third object indicates a foreground displaying state, the third object is a target object, and when the state information of a fourth object indicates a background running state, the fourth object is not the target object.

Optionally, the operation that the target object is determined from the one or more to-be-controlled objects according to a predetermined correspondence relationship may include the following exemplary operations.

In a first exemplary operation, a to-be-controlled object in a switch-on state is determined as the target object.

In a second exemplary operation, a to-be-controlled object with a switch-on time closest to a current time is determined as the target object. The to-be-controlled object with the switch-on time closest to the current time can be understood as an object that the user has just operated to open. In other exemplary operations, an object with a use frequency greater than a predetermined value (or with a highest use frequency) may be determined as the target object; or an object for which the working state is changed within predetermined time (for example, an application switched from running in the background to the foreground displaying state 3 seconds (3s) ago) is determined as the target object.

The state information may include at least one of the following: a switch-on/off state, a switch-on time, a use frequency, and the like.

In an implementation of the present embodiment, the operation that a target object that the first control instruction requests to control is determined from the one or more to-be-controlled objects according to the state information may include the following operations.

In operation S11, designated state information of a to-be-controlled object is determined according to the first control instruction.

In operation S12, a to-be-controlled object having state information matching the designated state information is determined as the target object. For example, when the first control instruction is "Turn on...... ", the designated state information of the to-be-controlled object is a switch-off state, because the user is not likely to ask for turning on an object that has already been turned on. As another example, when the first control instruction is "turn up the volume", the designated state information of the to-be-controlled object is the state in which the current volume is lower than a predetermined threshold, and the like.

Optionally, the operation that a to-be-controlled object having state information matching the designated state information is determined as the target object may include: a to-be-controlled object with a working state having a similarity with the designated state information higher than a preset threshold is determined as the target object, wherein the state information includes the working state. Alternatively, a to-be-controlled object with a working state having a similarity with the designated state information lower than the preset threshold may be determined as the target object.

Optionally, after a target object that the first control instruction requests to control is determined from the one or more to-be-controlled objects according to the state information, the method may further include:

when the target object is successfully determined from the one or more to-be-controlled objects, a second control instruction is sent to the target object through the first device, wherein the second control instruction is used for instructing the target object to execute an operation requested by the first control instruction; and when the target object is not successfully determined from the one or more to-be-controlled objects, feedback information requesting confirmation on the first control instruction is returned through the first device.

In the present embodiment, obtaining a first control instruction at a first device may be implemented in the following obtaining manners:

voice information which carries feature information is collected through the first device, and the first control instruction is generated according to the feature information;
text information which carries feature information is received from the first device, and the first control instruction is generated according to the feature information;
a remote control instruction is received from the first device, and the first control instruction is generated according to the remote control instruction; and
a control gesture is received from the first device, feature information is extracted from the control gesture, and the first control instruction is generated according to the feature information.

In the present embodiment, after the first control instruction is obtained at a first device, the first control instruction may be further identified, and then the target object may be determined according to the first control instruction. This determination manner may be used at the same time of using the previously mentioned determination manner (determining the target object according to the state information), and in this situation, one of the objects determined by the two determination manners may be used as the target object, or, when there are multiple target objects that are determined using one of the determination manners, the range of the target objects can be further reduced using the other determination manner. The operation that the target object is determined according to the first control instruction may include the following operations.

In operation S21, the first control instruction is identified to determine a control domain of the first control instruction.

In operation S22, a to-be-controlled object belonging to a same domain as the control domain is determined as the target object.

Optionally, identifying the first control instruction may include one of the following: identifying the first control instruction using a data model preset by the first device, the data model including databases in a plurality of domains; and identifying the first control instruction online through a network server. Before the data model preset by the first device is used to identify the first control instruction, the data model may be trained through a neural network. When training the data model, domains and state information need to be input into the data model as label vectors for the data model.

Through the description of the above implementations, those skilled in the art can clearly understand that the method according to the above embodiment may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

Embodiment 2

In the present embodiment, an apparatus for determining a control object is provided. The apparatus is used to implement the above embodiments and exemplary implementations, and the details having been described will not be repeated. As used below, the term "module" may implement a combination of software and/or hardware of a predetermined function. Although the apparatus described in the following embodiments is preferably implemented in software, the implementation in hardware or a combination of software and hardware is also possible and contemplated.

Fig. 3 is a structural block diagram of an apparatus for determining a control object according to an embodiment of the present disclosure. As shown in Fig. 3, the apparatus includes: an obtaining module 30 and a determining module 32.

The obtaining module 30 is configured to obtain a first control instruction and state information of one or more to-be-controlled objects at a first device, wherein there is a communication connection established between the first device and each of the one or more to-be-controlled objects.

The determining module 32 is configured to determine, from the one or more to-be-controlled objects according to the state information, a target object that the first control instruction requests to control.

Optionally, the determining module includes: a first determination unit, configured to parse the state information of the one or more to-be-controlled objects, and determine the target object from the one or more to-be-controlled objects according to a predetermined correspondence relationship. The predetermined correspondence relationship is used for indicating a correspondence relationship between state information and target objects.

Optionally, the determining module includes: a second determination unit, configured to determine designated state information of a to-be-controlled object according to the first control instruction; and a third determination unit, configured to determine a to-be-controlled object having state information matching the designated state information as the target object.

Optionally, the apparatus of the present embodiment may further include: a sending module, configured to send, after the determining module determines, from the one or more to-be-controlled objects according to the state information, a target object that the first control instruction requests to control, a second control instruction to the target object through the first device when the target object is successfully determined from the one or more to-be-controlled objects. The second control instruction is used for instructing the target object to execute an operation requested by the first control instruction.

It is to be noted that each of the above modules may be implemented by software or hardware. For the latter, the modules may be implemented by, but not limited to, either of the following manners: the above modules are all located in the same processor; or, the above modules are located in different processors in any combination form respectively.

Embodiment 3

The present embodiment is used to explain and illustrate the solution of the embodiments of the present application in detail in combination with examples in different scenarios.

The present embodiment provides a multi-scene collaborative interactive smart semantic understanding system, which is suitable for multiple scenarios and may be embedded in various voice/text interaction devices such as smart speakers, smart phones, and smart set-top boxes. Natural language processing, semantic analysis and understanding, artificial intelligence and other domains are involved. The semantic understanding system for collaborative interaction of multiple devices (scenes) provided in the present embodiment may be applied to various smart device interaction systems such as smart homes, smart phones, and smart vehicles. The semantic understanding system may receive voice and text input information, and receive state messages of an indefinite number of smart device scenes in real time. Finally, the semantic understanding system merges the variety of information through the semantic understanding platform, performs multiple rounds of interaction to deeply understand user intents, and converts user control instructions into service instructions the execution of which can be scheduled by smart devices.

The solution in the present embodiment involves four modules: a pre-processing module, a deep semantic understanding module, a result feedback module, and a data model management module.

The pre-processing module is configured to pre-process (including text error correction, conversion of pinyin to Chinese characters, and conversion of Chinese numbers to digits, etc) a message.

The deep semantic understanding module is composed of three sub-modules, namely a domain identifying module, an intent identifying module, and an information extracting module.

The domain identifying module is configured to initially identify, based on a device state, a domain to which the message from the user belongs, and the identification result may be a single or multiple domains.

The intent identifying module is configured to preliminarily determine user intents, including action intents such as "listen", "watch", and "open/turn on", as well as specific domain intents, such as "general query" and "focus query" in the domain of weather consultation.

The information extracting module is configured to extract information (including date, location, singer, actor, etc.) when the domain and intent of the message from the user are clear, and understand the user's intent in depth.

The result feedback module is composed of two sub-modules, namely an interaction module and an instruction generation module.

The interaction module is configured to actively guide the interaction to determine the user's intent when the domain and intent of the message from the user are not clear.

The instruction generation module is configured to generate an instruction message and return a json string indicating an operation to be performed by the user.

The data model management module is configured to maintain an algorithm library, a rule library, and a database required by the pre-processing module and the deep semantic understanding module.

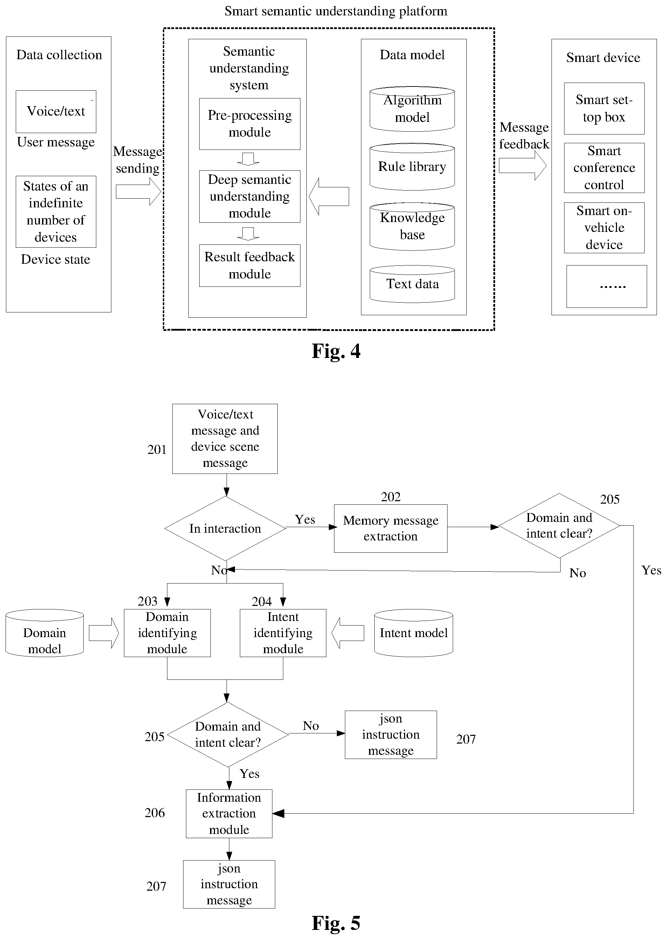

Fig. 4 is a diagram showing the overall system architecture according to an embodiment of the present disclosure. As shown in Fig. 4, the semantic understanding platform mainly collects voice/text messages and states of an indefinite number of devices. The system is mainly composed of a semantic understanding system and a data model. The semantic understanding system includes three modules, namely the pre-processing module, the deep semantic understanding module and the result feedback module. The purpose of the pre-processing module is to make user message text more standardized and prepare for the subsequent deep semantic understanding module. The result feedback module is used for providing response messages to the user. The deep semantic understanding module is a core functional module of the system.

The deep semantic understanding module is a set of general-purpose scene semantic understanding framework that supports multi-dimensional scene expansion. in order to achieve new scene expansion, it is only needed to maintain the corresponding corpus, without redefining a new framework.

Compared with the existing solutions in the industry, the system is more intelligent and user-friendly, and can be applied to various intelligent interactive devices while reducing system maintenance costs.

Fig. 5 is a flowchart showing the processing flow of a deep semantic understanding module according to an embodiment of the present disclosure. The module is a set of general-purpose scene semantic understanding framework. In order to achieve new scene expansion, it is only needed to maintain the corresponding corpus without redefining a new framework, making the system more intelligent. In addition, the deep semantic understanding module provides the function of receiving device scene state messages, which can be used for smart devices with multiple interaction modes to better realize context understanding. Therefore, the deep semantic understanding module is one of the core modules of the embodiments of the present disclosure.

The system may be used in a multi-device control system. For example, for smart home, the domains are various devices in the smart home, and the intents are to control the actions of the various devices. The system may also be used in a single-device multi-scene control system. For example, in a scenario where a smart set-top box corresponds to only one TV set, and the scenes include photo albums, movies and videos, music, etc., the domains are TV-related scenes, and the intents are to control the actions in various scenes.

The corpus preparation mainly includes domain library, device library and domain lexicon. The domain library is composed of multiple sub-libraries. Taking a smart set-top box as an example, the domain library includes a music library, a movie and video library, and a photo album library.

Music library: I want to listen to music, or some song please, ...
Movie library: I want to watch movies, or I want to watch war movies, ...
Album library: open photo albums, or open slides, ...

The device library mainly refers to the device state involved in the semantic understanding system. Taking the smart set-top box as an example, the device states are listed below:

TV: music, movies and videos, photo albums ...
Music: listen, play, stop, fast forward ...
Album: open, close, zoom ...
Movies: watch, search ...

Taking smart home as an example, the device states are listed below:

Light: turn on, turn off ...
Air conditioner: turn on, turn off, cool, heat, dehumidify ...

The domain lexicon is mainly used for information extraction, such as the location of home devices, movie names and other special vocabularies for a specific domain. The specific format is as follows:

Devide_location: master bedroom, living room, kitchen ...
Music_name: Ode to joy, Childhood, Travel Across the Ocean to Meet You ...
Video_name: Ode to joy, With You, Emergency Doctor ...

The sub-modules in Fig. 5 are described below in more detail.

Module 201 is a json message collection module, which is mainly configured to collect messages including voice/text messages and device state messages. The specific format is as follows:

```
zxvcaInput={
    "zxvca_text": "text message obtained by voice identification",
    "zxvca_device": [
        {
            "deviceId": "1",
            "deviceName": "device 1 name",
            "device_state": "device 1 state"
        },
        {
            "deviceId": "2",
            "deviceName": "device 2 name",
            "device_state": "device 2 state"
        },
        {
            "deviceId": "3",
            "deviceName": "device 3 name",
            "device_state": "device 3 state"
        }
    ] },
}
```

"zxvca_text" is the text message or the message content obtained by voice identification, and "zxvca_device" is the device state in the form of an array, wherein the number of items in the array may be adjusted according to the number of devices in practical applications.

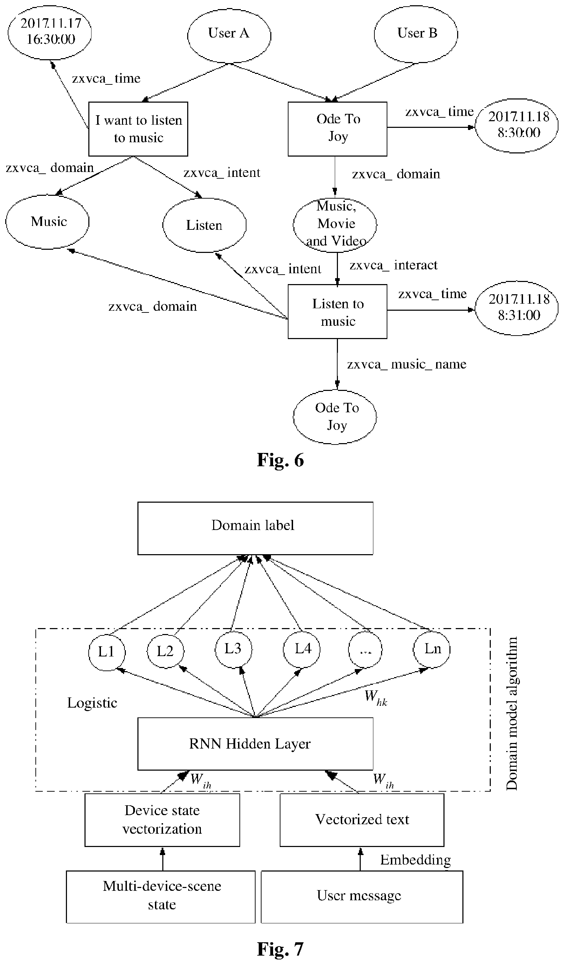

Module 202 is a memory module, which is one of the core modules protected by this patent. The memory module is mainly configured to store user historical message data and form a mesh structure. The specific storage format is shown in Fig. 6. Fig. 6 is a schematic diagram showing the process of storing user historical data of a memory module according to an embodiment of the present disclosure. The content includes voice/text message, and the domain, intent and message time of the current message, etc. Based on user habits, big data analysis and mining reasoning may be performed subsequently according to the memory module to determine the user's true intent, so that the number of interactions can be reduced, and the system is more intelligent. The intent of a new user may be inferred based on the data of most users. For example, when a user A and a user B confirms through interaction that their intents of saying "Ode to Joy" are that they want to listen to the music "Ode to Joy", when a user C also says "Ode to Joy", it can be directly inferred that the user C wants to listen to the song of Ode to Joy instead of music. The module may also be used in other product services such as recommendation systems and user profile analysis.

Module 203 is a domain identifying module, which is one of the core modules protected by this patent. A domain identification framework is as shown in Fig. 7. Fig. 7 is a diagram showing the framework of a domain identification model according to an embodiment of the present disclosure.

The domain identifying module is achieved by multiple dichotomy algorithms RANN, which include the part for offline training and the part for online use. The framework for the domain classification model is shown in Fig. 6, where the parameter set in the network structure is the domain model. The model framework supports the continuous expansion of the domain (that is, the device scene), thus avoiding repeated model training based on big data when new corpus needs to be added, thereby reducing training time. The algorithm mainly includes the following five parts, which are described in detail below based on the application scenario of a smart set-top box as an example.

The device is correlated with a TV having a serial number 1, and the scene state includes music, movie and video, and photo album respectively numbered as 100, 010, and 001. For example, in the present embodiment, a user message "play a song" is received, and the device state is "TV photo album".

Input layer: inputting user message text, and device states.
Vectorization: mainly including sentence vectorization and device state vectorization.

The sentence vectorization is namely user message segmentation. Specifically, the word2vec of all words is summed to obtain a sentence vector. The device state vectorization is composed of device number vector and scene state vector. The current device scene state is: 1001.

Hidden layer: $b_h = f(W_{ih}x_t + W_{h'h}b_{h-1}) + b$, where $f$ is an activation function, $W_{ih}$ is weights of the input layer and the hidden layer, and $W_{h'h}$ is a weight before the hidden layer. The hidden layer is the black box of deep learning, and the main concerns about the hidden layer include the activation function, the number of neurons in the hidden layer, and the number of hidden layers. These parameters can be adjusted according to specific application scenarios, and there is no unified standard for the configuration of these parameters.

Output layer: using multiple logistic regression functions on the output results of the hidden layer to obtain N sets of binary vectors, in which the value on a certain position being 0 means that the user message does not belong to the domain corresponding to this position, and the value on a certain position being 1 means that the user message belongs to the domain corresponding to this position. In this scenario, the output layer consists of three logistic regression models, namely L1 (whether it is music), L2 (whether it is a movie or video), and L3 (whether it is a photo album). The final result of the output layer is 3 sets of binary vectors, respectively being 0.1 0.9, 0.8 0.2, 0.9 0.1.

Label standardization: converting the N binary vectors of the output layer into N-ary vectors, and extracting the position with the maximum value of each binary vector. The final output value of the current scene is 100, that is, the message belongs to the music domain.

The offline training corpus and online usage of the domain model are introduced below.

Offline training: the format of training corpus is "device state + text + label", in which different items can be separated by "|", as shown below:

TV Movie and Video|play a song|1100
TV Music|Ode to Joy|100
TV Movie and Video |Ode to Joy|010
TV Album|Ode to Joy|110
TV Movie and Video |Tum on Music|100
TV Music|Open photo album|001
TV Music|Watch a movie|010

The label length is equal to the number of domains, the position 1 represents "music", the position 2 represents "movie and video", and the position 3 represents "photo album".

Online use: after the message from the user is segmented, the results of multiple dichotomy models are used to determine which domains the message belongs to. The results can indicate that the message belong to a single domain or multiple domains. Examples are provided as follows:

Single-domain results

When the user message is "play an ode to joy" and the device state is "TV music", the model may output the label 100, that is, the message belongs to the music domain.

Multi-domain results

When the user message is "ode to joy" and the device state is "TV photo album", the model may output the label 110, that is, the message belongs to the music domain and the movie and video domain simultaneously.

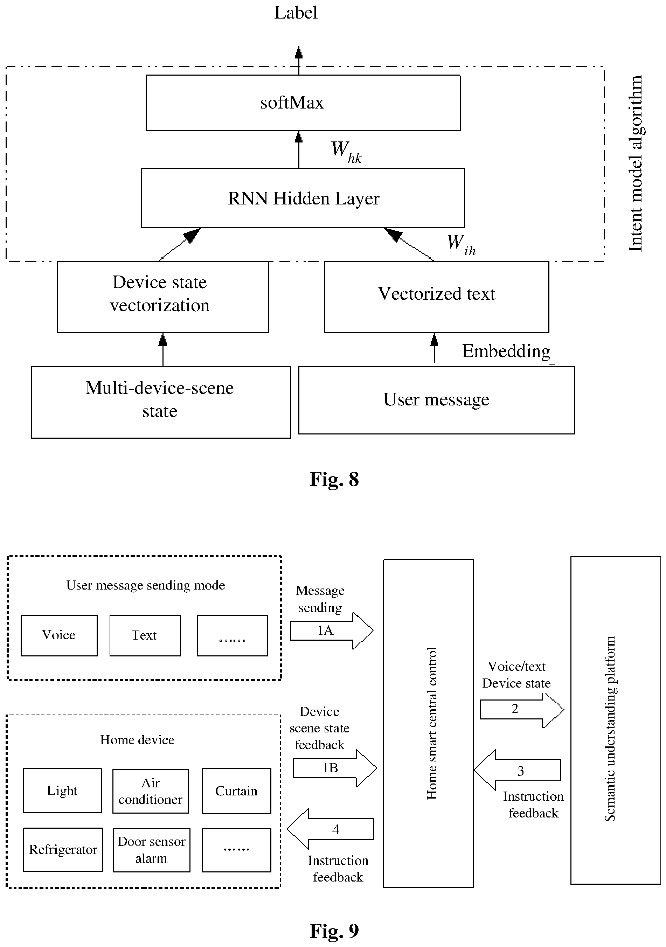

Module 204 is an intent identifying module, which is one of the core modules protected by this patent. The intent is more stable compared with the domain, and therefore the embodiment adopts a multi-classification algorithm to achieve the intent identifying module. The intent in the device library is converted into multiple labels by adopting a multi-classification algorithm RANN, which include the part for offline training and the part for online use. The framework of an intent identification model is as shown in Fig. 8. Fig. 8 is a diagram showing the framework of an intent identification model according to an embodiment of the present disclosure, where the parameter set of the network structure is the intent model. The framework of the intent identification model is similar to that of the domain identification model, and the difference lies only in that the output layer for the intent identification model is changed to a softMax function, and that the model architecture for the intent identification model is modified to a multi-classification model. The algorithm mainly includes the following four parts, which are described in detail below based on the application scenario of a smart set-top box as an example.

The device is correlated with a TV having a serial number 1, and the scene state includes music, movie and video, and photo album respectively numbered as 100, 010, and 001. Considering that some questions do not involve actions, that is, there is no intent in these questions, it is assumed herein that the user has the following intents concerning the smart set-top box: open, watch, listen, others (no intent), wherein 1000 stands for "open", 0100 stands for "watch", 0010 stands for "listen", and 0010 stands for "others". For example, in the present embodiment, a user message "play a song" is received, and the device state is "TV photo album".

Input layer: inputting user message text, and device states.

Vectorization: mainly including sentence vectorization and device state vectorization.

The sentence vectorization is namely user message segmentation. Specifically, the word2vec of all words is summed to obtain a sentence vector. The device state vectorization is composed of device number vector and scene state vector. The current device scene state is: 1001.

Hidden layer: $b_h = f(W_{ih}x_t + W_{h'h}b_{h-1}) + b$, where $f$ is an activation function, $W_{ih}$ is weights of the input layer and the hidden layer, and $W_{h'h}$ is a weight before the hidden layer. The hidden layer is the black box of deep learning, and the main concerns about the hidden layer include the activation function, the number of neurons in the hidden layer, and the number of hidden layers. These parameters can be adjusted according to specific application scenarios, and there is no unified standard for the configuration of these parameters.

$$O_k = \frac{e^{W_{hk}b_h}}{\sum_{k=1}^{n} e^{W_{hk}b_h}},$$

Output layer: performing softmax normalization, on the output result of the hidden layer, where $W_{hk}$ is the weights of the hidden layer and the output layer. In this scenario, the output layer outputs a 4-element vector, and the position corresponding to the maximum value is the real intent of the current user. For example, when the result output by the model is 0.02 0.05 0.9 0.03, the intent is to "listen".

The offline training corpus and online usage of the intent model are introduced below.

Offline training: the format of training corpus is "device state + text + label", in which different items can be separated by "|". Specific examples are as shown below:

TV Movie and Video |Hello|0001

TV Movie and Video |Listen to Music|0010

TV Music|Open photo album|1000

TV Album|Watch Andy Lau's Movie|0100

The model is trained to obtain the intent identification model. For the present example, 1000 stands for "open", 0100 stands for "watch", 0010 stands for "listen", and 0010 stands for "others".

Online use: after the message from the user is segmented, the multi-classification model is loaded to obtain a prediction result. Examples are given as follows.

When the message from the user is "Play a song by Andy Lau" and the device state is "TV photo album", the result output by the model is 0.02 0.05 0.9 0.03, which means that the intent is to "listen".

Module 205 is a domain intent clarity judgment module, which is one of the core modules protected by this patent, and is mainly configured to determine whether the process needs to proceed to the interactive mode. By virtue of this module, in addition to accurate determination of the user's intent, a human-like interaction mechanism can be introduced. The module mainly judges the problems of multi-domain, absence of intent, or absence of both domain and intent.

For example, when a user says "search for Ode to Joy", the domain identification result is "music" or "movie and video", which means that the system is confronting a multi-domain problem. Since the intent is not clear enough, it is necessary to interact with the user to determine what the user wants to express.

For example, when a user says "Ode to Joy", the intent identification result is "others", that is, no intent, which means that the system is confronting a problem of absence of intent. In this situation, it is necessary to interact with the user by asking a question "Do you want to play Ode to Joy or search for Ode to Joy video resources".

For example, when a user says "hello", both the domain and the intent are missing, which means that the system is confronting a problem of absence of both domain and intent. In this situation, it is suggested to interact with the user by prompting "I can help you browse photos, watch movies, and listen to music."

The interactive content will be returned by a json message together with the instruction analysis result. In practical service applications, whether to interact may be flexibly chosen.

Module 206 is an information extracting module, which is a module for the semantic understanding and is achieved using a classic algorithm LSTM+CRF sequence label algorithm. General knowledge mainly includes date, location, name, etc. Domain knowledge, such as singers, actors, film and television production areas, and music styles, needs to be provided in corresponding domain lexicons, which may use index matching methods.

Module 207 is an output module, which generates semantic json instruction messages, and is one of the core modules of the embodiments of the present disclosure. The output module facilitates log packet capture and information collection. The message format is as follows:

```
zxvcaOutput={
    "zxvca_text": "text message obtained by voice identification",
    "zxvca_result": [
        {
            "zxvca_domain": "domain identification result 1",
            "zxvca_intent": "intent identification result",
            "score": "the score indicating the possibility that the message belongs
            to the current domain"
        },
        {
            "zxvca_domain": "domain identification result 2",
            "zxvca_intent": "intent identification result",
            "score": "the score indicating the possibility that the message belongs
            to the current domain"
        },
    ],
    "zxvca_info": {
        "zxvca_people": "information extraction name",
        "zxvca_time": "information extraction time",
        "zxvca_date": "information extraction date",
        "zxvca_location": "information extraction location",
    "zxvca_keyword": "information extraction keyword",
    },
    "zxvca_interact": "content needing to be interacted" }
```

"zxvca_text" is a text message or message content obtained by voice identification. "zxvca_result" is a domain and intent identification result. The "zxvca_result" is in the form of an array which includes domain, intent, and scores corresponding to the domain. "zxvca_info" is an information extraction result, and is in the form of an array which includes name, time, location, etc. The content that needs to be extracted can be expanded according to product requirements.

The embodiment of the present disclosure provides multiple exemplary implementations and exemplary operations based on special cases such as home service robots, smart set-top boxes, smart conference controls, and smart vehicles.

Implementation 1

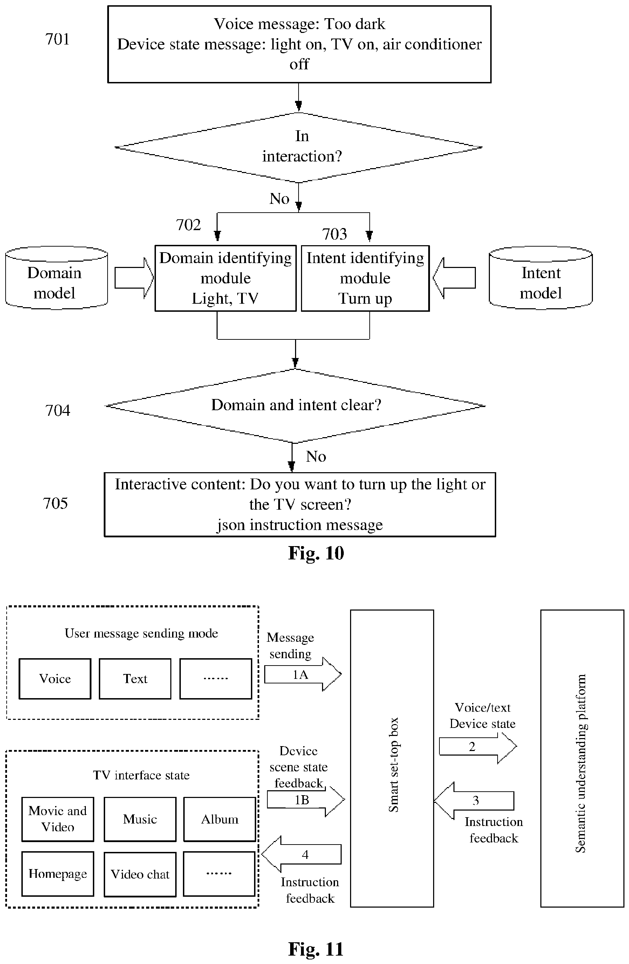

For a home service robot, please refer to Fig. 9 and Fig. 10. Fig. 9 is a diagram showing the framework of a home service robot in Implementation 1. Fig. 10 is a flowchart showing the processing flow of a home service robot in Implementation 1.

The present embodiment mainly describes the following application scenarios: multiple devices and multiple scenarios are not in the interaction, and the instruction analysis result shows that further interaction is needed.

1) The home service robot scene includes lights, air conditioners, curtains, etc. A home smart central control collects user messages and state messages of home devices. Operations here include but are not limited to voice instructions, remote control instructions, touch screen operations on smart terminals, gesture instructions, etc.

2) In data flows 1A and 1B in Fig. 9, the smart central control collects user messages and device state messages respectively.

3) In a data flow 2 in Fig. 9, the semantic understanding platform receives user messages and state messages of home devices, for example:

```
zxvcaInput={
    "zxvca_text": "too dark",
    "zxvca_device": [
        {
            "deviceId": "1",
            "deviceName": "light",
            "device_state": "switch-on"
        },
        {
            "deviceId": "2",
            "deviceName": "TV",
            "device_state": "switch-on"
        },
        {
            "deviceId": "3",
            "deviceName": "air conditioner",
            "device_state": "switch-off"
        },
    ]
}
```

4) Not in the interaction, domain identification is performed according to module 702 in Fig. 10, and the domain identification result is "light" or "TV". Intent identification is performed according to module 703 in Fig. 10, and the intent identification result is "turn up".

5) According to module 704 in Fig. 10, it is determined that the multi-domain intent is not clear, and the user's intent needs to be confirmed through interaction with the user. Interactive content "Do you want to turn up the lights or the TV screen?" is generated.

6) In data flow 3 in Fig. 9, the voice understanding platform sends an instruction message to the home smart central control, and the message content is as follows:

```
zxvcaOutput={
    "zxvca_text": "too dark",
    "zxvca_result": [
        {
            "zxvca_domain": "light",
            "zxvca_intent": "turn up",
            "score": "0.85"
        },
        {
            "zxvca_domain": "TV",
            "zxvca_intent": "turn up",
```

```
            "score": "0.8"
        },
    ],
"zxvca_interact": "Do you want to turn up the lights or the TV screen?"
}
```

7) In data flow 4 in Fig. 9, the smart central control chooses, according to the needs, to conduct interaction or directly distribute instructions to the corresponding device to operate the device.

Implementation 2

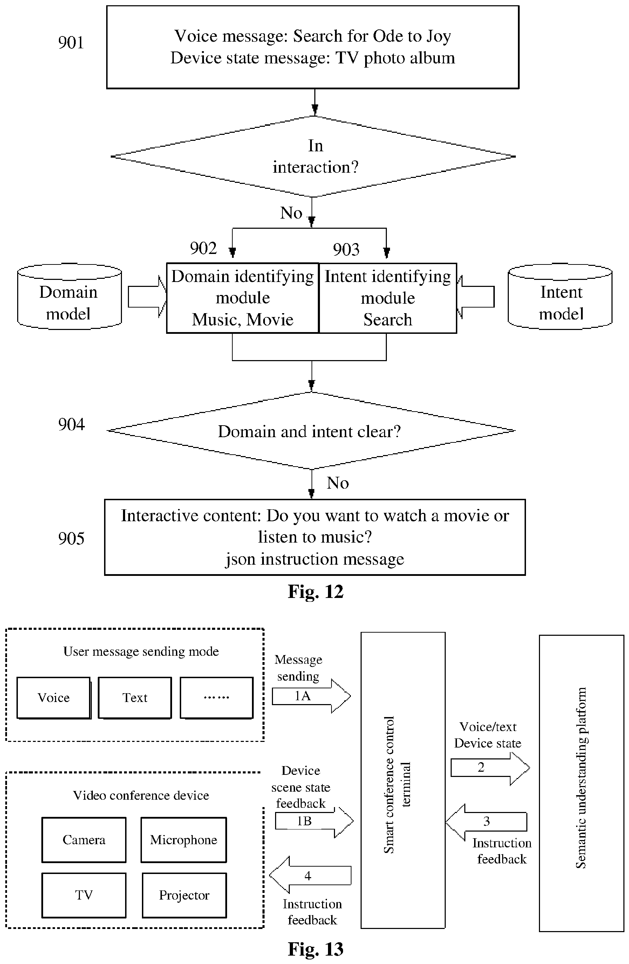

For a home set-top box, please refer to Fig. 11 and Fig. 12. Fig. 11 is a diagram showing the framework of a smart set-top box in Implementation 2. Fig. 12 is a flowchart showing the processing flow of a smart set-top box in Implementation 2.

The present embodiment mainly describes the following application scenarios: single devices and multiple scenarios are not in the interaction, and the instruction analysis result shows that further interaction is needed.

1) The smart set-top box scene includes movie and video, music, photo albums, etc. The smart set-top box collects user messages and state messages of TV interfaces. Operations here include but are not limited to voice instructions, remote control instructions, touch screen operations on smart terminals, gesture instructions, etc.

2) In data flows 1A and 1B in Fig. 11, the smart set-top box collects user messages and device state messages respectively.

3) In a data flow 2 in Fig. 11, the semantic understanding platform receives user messages and state messages of home devices, based on which the context is understood. For example:

```
zxvcaInput={
    "zxvca_text": "search for Ode to Joy",
    "zxvca_device": [
        {
            "deviceId": "1",
            "deviceName": "TV",
            "device_state": "photo album"
        },
    ]
}
```

4) Not in the interaction, domain identification is performed according to module 902 in Fig. 12, and the domain identification result is "music" or "movie and video"; intent identification is performed according to module 903 in Fig. 12, and the intent identification result is "search".

5) According to module 904 in Fig. 12, it is determined that the multi-domain intent is not clear, and the user's intent needs to be confirmed through interaction. Interactive content "Do you want to watch movies or listen to music?" is generated.

6) In data flow 3 in Fig. 11, the voice understanding platform sends an instruction message to the smart set-top box, and the message content is as follows:

```
zxvcaOutput={
    "zxvca_text": "search for Ode to Joy",
    "zxvca_result": [
        {
            "zxvca_domain": "music",
            "zxvca_intent": "search",
            "score": "0.92"
        },
        {
            "zxvca_domain": "movie and video",
            "zxvca_intent": "search",
            "score": "0.89"
        },
    ],
"zxvca_interact": "Do you want to watch movies or listen to music?"
```

}

7) In data flow 4 in Fig. 11, the smart set-top box chooses, according to the needs, to conduct interaction or directly send instructions to the TV to operate the TV.

Implementation 3

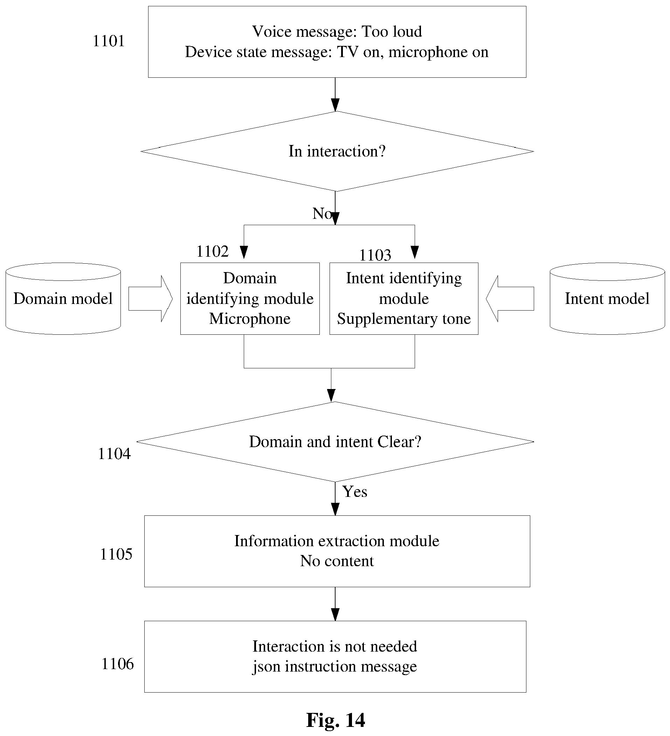

For a smart conference control, please refer to Fig. 13 and Fig. 14. Fig. 13 is a diagram showing the framework of a smart conference control in Implementation 3. Fig. 14 is a flowchart for a smart conference control in Implementation 3.

The present embodiment mainly describes the following application scenarios: multiple devices and multiple scenarios are not in the interaction, and the instruction analysis result shows that no further interaction is needed.

1) The smart conference control scene includes instruction operation and fault diagnosis. The smart conference control terminal collects user messages. Operations here include but are not limited to voice instructions, remote control instructions, touch screen operations on smart terminals, gesture instructions, etc.

2) In data flows 1A and 1B in Fig. 13, the smart conference control terminal collects user messages and device state messages respectively.

3) In a data flow 2 in Fig. 13, the semantic understanding platform receives user messages and state messages of television conference devices, based on which the context is understood. For example:

```
zxvcaInput={
    "zxvca_text": "too loud",
    "zxvca_device": [
        {
            "deviceId": "1",
            "deviceName": "TV",
            "device_state": "switch-on"
        },
        {
            "deviceId": "2",
            "deviceName": "microphone",
            "device_state": "switch-on"
        },
        {
            "deviceId": "3",
            "deviceName": "camera",
            "device_state": "switch-off"
        }
    ]
},
```

4) Not in the interaction, domain identification is performed according to module 1102 in Fig. 14, and the domain identification result is "microphone". Intent identification is performed according to module 1103 in Fig. 14, and the intent identification result is "supplementary tone".

5) According to module 1104 in Fig. 14, it is determined that the domain and the intent are clear. According to module 1105 in Fig. 14, information extraction is performed, and no content is extracted.

6) In data flow 3 in Fig. 13, the voice understanding platform sends an instruction message to the smart conference control terminal, and the message format is as follows:

```
zxvcaOutput={
    "zxvca_text": "too loud",
    "zxvca_result": [
        {
            "zxvca_domain": "microphone",
            " zxvca_intent": "supplementary tone",
            "score": "0.92"
        },
    ],
}
```

7) In data flow 4 in Fig. 13, the smart conference control terminal distributes instructions to the corresponding device to operate the device.

Implementation 4

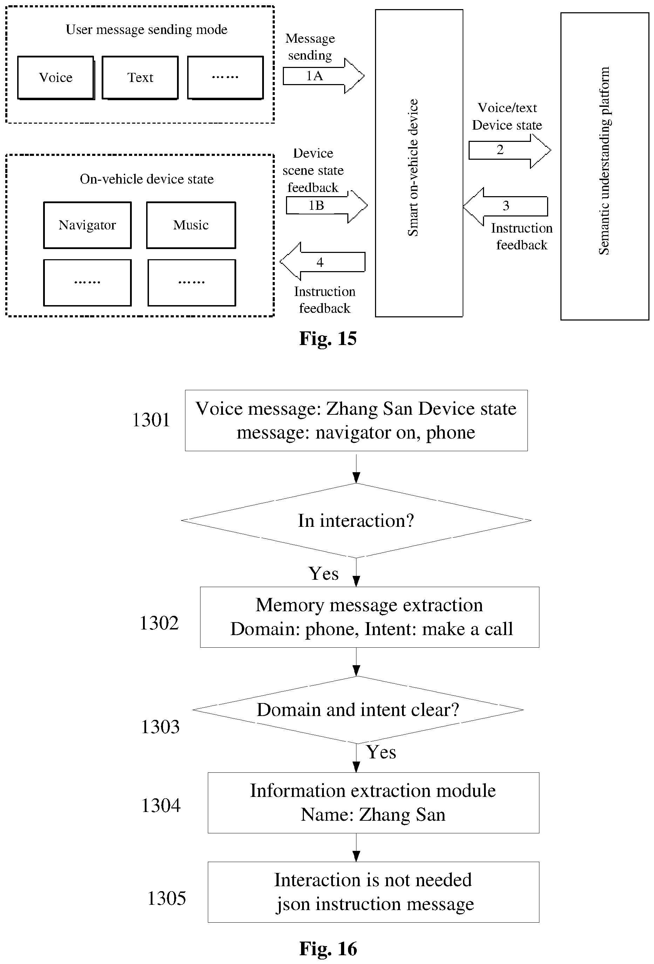

For a smart vehicle, please refer to Fig. 15 and Fig. 16. Fig. 15 is a diagram showing the framework of a smart vehicle in Implementation 4. Fig. 16 is a flowchart for a smart vehicle in Implementation 4.
The present embodiment mainly describes the following application scenarios: multiple devices and multiple scenarios are in the interaction, and the instruction analysis result shows that no further interaction is needed.

1) The smart vehicle scene includes making a call, listening to music, navigating, etc. The smart vehicle collects user messages. Operations here include but are not limited to voice instructions, remote control instructions, touch screen operations on smart terminals, gesture instructions, etc.
2) In data flows 1A and 1B in Fig. 15, the smart vehicle collects user messages and state messages of devices respectively.
3) In a data flow 2 in Fig. 15, the semantic understanding platform receives user messages and state messages of on-vehicle devices, for example:

```
zxvcaInput={
      "zxvca_text": "Zhang San",
      "zxvca_device": [
            {
                  "deviceId": "1",
                  "deviceName": "navigator",
                  "device_state": "switch-off"
            },
            {
                  "deviceId": "2",
                  "deviceName": "phone",
                  "device_state": "call"
            },
      ]
}
```

4) In the interaction, domain and intent in the memory are extracted according to module 1302 in Fig. 16, and the result is that the domain is "phone" and the intent is to "make a call".
5) According to module 1303 in Fig. 16, it is determined that the domain and the intent are clear, the information is extracted according to module 1304 in Fig. 16, and the result is: name "Zhang San".
6) In data flow 3 in Fig. 15, the voice understanding platform sends an instruction message to the smart vehicle, and the message format is as follows:

```
zxvcaOutput={
      "zxvca_text": "Zhang San",
      "zxvca_result": [
            {
                  "zxvca_domain": "phone",
                  " zxvca_intent": "make a call",
            "score": "0.87"
            },
      ],
            "zxvca_info": {
      "zxvca_people": "Zhang San",
            },
}
```

7) In data flow 4 in Fig. 15, the smart on-vehicle device distributes instructions to the corresponding device to operate the device.

Embodiment 4

The embodiment of the present disclosure provides a storage medium. The storage medium stores a computer program which, when being run, performs the operations in any one of the above method embodiments.

In one or more exemplary embodiment, the storage medium may be configured to store a computer program for performing the following operations.

In operation S1, a first control instruction and state information of one or more to-be-controlled objects are obtained at a first device, wherein there is a communication connection established between the first device and each of the one or more to-be-controlled objects.

In operation S2, a target object that the first control instruction requests to control is determined from the one or more to-be-controlled objects according to the state information.

In one or more exemplary embodiment, the storage medium may include, but is not limited to, various media (such as a U disk, a ROM, a RAM, a mobile hard disk, a magnetic disk or an optical disc) capable of storing a computer program.

The embodiment of the present disclosure provides an electronic device. The electronic device includes a memory and a processor. The memory stores a computer program. The processor is configured to run the computer program to perform the operations in any one of the above method embodiments.

In one or more exemplary embodiment, the electronic device may further include a transmission device and an input-output device. The transmission device is connected to the processor, and the input-output device is connected to the processor.

In one or more exemplary embodiment, the processor may be configured to use the computer program to perform the following operations.

In operation S1, a first control instruction and state information of one or more to-be-controlled objects are obtained at a first device, wherein there is a communication connection established between the first device and each of the one or more to-be-controlled objects.

In operation S2, a target object that the first control instruction requests to control is determined from the one or more to-be-controlled objects according to the state information.

Optionally, specific implementations for the present embodiment may refer to the examples described in the above embodiments and alternative implementations, and details are not repeated in the present embodiment.

It is apparent that a person skilled in the art shall understand that all of the above-mentioned modules or operations in the present disclosure may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

The above is only the exemplary embodiments of the present disclosure, not intended to limit the present disclosure. As will occur to those skilled in the art, the present disclosure is susceptible to various modifications and changes. Any modifications, equivalent replacements, improvements and the like made within the principle of the present disclosure shall fall within the scope of protection of the present disclosure.

## Industrial Applicability

As described above, the method and apparatus for determining a control object, a storage medium, and an electronic device provided by the embodiments of the present disclosure have the following beneficial effects: the technical problem in the related art that cumbersome operations are required for determining the target object is solved, the number of interactions between a central control and a user is reduced, the intelligence of the central control is improved, and the user experience is improved.

## Claims

1.   A method for determining a control object, comprising:

   obtaining a first control instruction and state information of one or more to-be-controlled objects at a first device, wherein there is a communication connection established between the first device and each of the one or more to-be-controlled objects; and
determining, from the one or more to-be-controlled objects according to the state information, a target object that the first control instruction requests to control.

2. The method according to claim 1, wherein determining, from the one or more to-be-controlled objects according to the state information, a target object that the first control instruction requests to control comprises:
parsing the state information of the one or more to-be-controlled objects, and determining the target object from the one or more to-be-controlled objects according to a predetermined correspondence relationship, wherein the predetermined correspondence relationship is used for indicating a correspondence relationship between state information and target objects.

3. The method according to claim 2, wherein determining the target object from the one or more to-be-controlled objects according to a predetermined correspondence relationship comprises one of the following:

determining a to-be-controlled object in a switch-on state as the target object; and
determining a to-be-controlled object with a switch-on time closest to a current time as the target object,

wherein the state information comprises at least one of the following: a switch-on/off state and a switch-on time.

4. The method according to claim 1, wherein determining, from the one or more to-be-controlled objects according to the state information, a target object that the first control instruction requests to control comprises:

determining designated state information of a to-be-controlled object according to the first control instruction; and
determining a to-be-controlled object having state information matching the designated state information as the target object.

5. The method according to claim 4, wherein determining a to-be-controlled object having state information matching the designated state information as the target object comprises:

determining a to-be-controlled object with a working state having a similarity with the designated state information higher than a preset threshold as the target object, wherein the state information comprises the working state.

6. The method according to claim 1, wherein after determining, from the one or more to-be-controlled objects according to the state information, a target object that the first control instruction requests to control, the method further comprises:
sending, when the target object is successfully determined from the one or more to-be-controlled objects, a second control instruction to the target object through the first device, wherein the second control instruction is used for instructing the target object to execute an operation requested by the first control instruction.

7. The method according to claim 1, wherein after determining, from the one or more to-be-controlled objects according to the state information, a target object that the first control instruction requests to control, the method further comprises:
returning, when the target object is not successfully determined from the one or more to-be-controlled objects, feedback information requesting confirmation on the first control instruction through the first device.

8. The method according to claim 1, wherein obtaining a first control instruction at a first device comprises at least one of the following:

collecting, through the first device, voice information which carries feature information, and generating the first control instruction according to the feature information;
receiving, from the first device, text information which carries feature information, and generating the first control instruction according to the feature information;
receiving a remote control instruction from the first device, and generating the first control instruction according to the remote control instruction; and
receiving a control gesture from the first device, extracting feature information from the control gesture, and generating the first control instruction according to the feature information.

9. The method according to claim 1, wherein after obtaining a first control instruction at a first device, the method further comprises:

identifying the first control instruction to determine a control domain of the first control instruction; and
determining a to-be-controlled object belonging to a same domain as the control domain as the target object.

10. The method according to claim 9, wherein identifying the first control instruction comprises at least one of the following:

identifying the first control instruction using a data model preset by the first device, wherein the data model comprises databases in a plurality of domains; and
identifying the first control instruction online through a network server.

11. An apparatus for determining a control object, comprising:

an obtaining module, configured to obtain a first control instruction and state information of one or more to-be-controlled objects at a first device, wherein there is a communication connection established between the first device and each of the one or more to-be-controlled objects; and
a determining module, configured to determine, from the one or more to-be-controlled objects according to the state information, a target object that the first control instruction requests to control.

12. The apparatus according to claim 11, wherein the determining module comprises:
a first determination unit, configured to parse the state information of the one or more to-be-controlled objects, and determine the target object from the one or more to-be-controlled objects according to a predetermined correspondence relationship, wherein the predetermined correspondence relationship is used for indicating a correspondence relationship between state information and target objects.

13. The apparatus according to claim 11, wherein the determining module comprises:

a second determination unit, configured to determine designated state information of a to-be-controlled object according to the first control instruction; and
a third determination unit, configured to determine a to-be-controlled object having state information matching the designated state information as the target object.

14. The apparatus according to claim 11, further comprising:
a sending module, configured to send, after the determining module determines, from the one or more to-be-controlled objects according to the state information, the target object that the first control instruction requests to control, a second control instruction to the target object through the first device when the target object is successfully determined from the one or more to-be-controlled objects, wherein the second control instruction is used for instructing the target object to execute an operation requested by the first control instruction.

15. A storage medium, storing a computer program which, when being run, performs the method according to any one of claims 1 to 10.

16. An electronic device, comprising a memory and a processor, wherein the memory stores a computer program, and the processor is configured to run the computer program to perform the method according to any one of claims 1 to 10.

Object 2

Central control

Object 1    Object n

**Fig. 1**

Obtaining a first control instruction and state information of one
or more to-be-controlled objects at a first device, wherein there is
a communication connection established between the first device
and each of the one or more to-be-controlled objects

~ S202

Determine, from the one or more to-be-controlled objects
according to the state information, a target object that the first
control instruction requests to control

~ S204

**Fig. 2**

Obtaining module        / 30

Determining module      / 32

**Fig. 3**

Smart semantic understanding platform

**Fig. 4**

**Fig. 5**

**Fig. 6**

**Fig. 7**

Label

Fig. 8

Fig. 9

701

Voice message: Too dark
Device state message: light on, TV on, air conditioner off

In interaction?

No

702

703

Domain model

Domain identifying module
Light, TV

Intent identifying module
Turn up

Intent model

704 Domain and intent clear?

No

705

Interactive content: Do you want to turn up the light or the TV screen?
json instruction message

**Fig. 10**

User message sending mode

Voice | Text | ······

Message sending
1A

Device scene state feedback
1B

TV interface state

Movie and Video | Music | Album
Homepage | Video chat | ······

Smart set-top box

Voice/text Device state
2

3
Instruction feedback

Semantic understanding platform

4
Instruction feedback

**Fig. 11**

901 | Voice message: Search for Ode to Joy
Device state message: TV photo album

In interaction?

No

902 | Domain identifying module
Music, Movie

903 | Intent identifying module
Search

Domain model

Intent model

904 | Domain and intent clear?

No

905 | Interactive content: Do you want to watch a movie or listen to music?
json instruction message

**Fig. 12**

User message sending mode

Voice | Text | ······

Message sending
1A

Device scene state feedback
1B

Video conference device

Camera | Microphone

TV | Projector

Instruction feedback

4

Smart conference control terminal

Voice/text Device state
2

3
Instruction feedback

Semantic understanding platform

**Fig. 13**

1101 | Voice message: Too loud
Device state message: TV on, microphone on

In interaction?

No

1102 | Domain
identifying module
Microphone

Domain model

1103 | Intent identifying
module
Supplementary tone

Intent model

1104 | Domain and intent Clear?

Yes

1105 | Information extraction module
No content

1106 | Interaction is not needed
json instruction message

**Fig. 14**

**Fig. 15**

| | |
|---|---|
| 1301 | Voice message: Zhang San Device state message: navigator on, phone |

In interaction?

Yes

| | |
|---|---|
| 1302 | Memory message extraction Domain: phone, Intent: make a call |

Domain and intent clear?

Yes

| | |
|---|---|
| 1304 | Information extraction module Name: Zhang San |

| | |
|---|---|
| 1305 | Interaction is not needed json instruction message |

**Fig. 16**

## INTERNATIONAL SEARCH REPORT

| International application No. |
| --- |
| **PCT/CN2019/082348** |

| A. | CLASSIFICATION OF SUBJECT MATTER |
| --- | --- |
| | G05B 15/02(2006.01)i; G05B 19/418(2006.01)i |

According to International Patent Classification (IPC) or to both national classification and IPC

| B. | FIELDS SEARCHED |
| --- | --- |

Minimum documentation searched (classification system followed by classification symbols)

G05B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 智能, 家电, 目标, 用户, 对象, 选择, 唤醒, 控制, 状态, intelligen??, household, applicance, target, user?, object, choose, choice, wake?, rouse, control+, state

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 108646580 A (ZTE CORPORATION) 12 October 2018 (2018-10-12) claims 1-16, and description, paragraphs [0032]-[0228] | 1-16 |
| X | CN 105511287 A (GREE ELECTRIC APPLIANCES, INC. OF ZHUHAI) 20 April 2016 (2016-04-20) description, paragraphs [0036]-[0050] and [0099]-[0126], and figures 1 and 4-9 | 1-16 |
| A | CN 105739321 A (GUANGZHOU VIDEO-STAR ELECTRONICS INDUSTRY CO., LTD.) 06 July 2016 (2016-07-06) entire document | 1-16 |
| A | CN 107612968 A (BEIJING MOR ROBOT TECH CO., LTD.) 19 January 2018 (2018-01-19) entire document | 1-16 |
| A | CN 104538030 A (IFLYTEK CO., LTD.) 22 April 2015 (2015-04-22) entire document | 1-16 |
| A | US 2018026942 A1 (HONEYWELL INTERNATIONAL INC.) 25 January 2018 (2018-01-25) entire document | 1-16 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 May 2019** | **27 June 2019** |

| Name and mailing address of the ISA/CN | Authorized officer |
| --- | --- |
| **National Intellectual Property Administration, PRC (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/082348**

| Patent document cited in search report | | | Publication date (day/month/year) | Patent family member(s) | | | Publication date (day/month/year) |
|---|---|---|---|---|---|---|---|
| CN | 108646580 | A | 12 October 2018 | None | | | |
| CN | 105511287 | A | 20 April 2016 | None | | | |
| CN | 105739321 | A | 06 July 2016 | None | | | |
| CN | 107612968 | A | 19 January 2018 | None | | | |
| CN | 104538030 | A | 22 April 2015 | None | | | |
| US | 2018026942 | A1 | 25 January 2018 | EP | 3276887 | A1 | 31 January 2018 |

Form PCT/ISA/210 (patent family annex) (January 2015)